# EUROPÄISCHE PATENTANMELDUNG

(11) **EP 1 970 668 A1**
(43) Veröffentlichungstag der Anmeldung: **17.09.2008**
(21) Anmeldenummer: 07450046.3
(22) Anmeldetag: 14.03.2007
(51) Int. Cl.: G01B 11/24

(54) **Verfahren und Apparat zur optischen Messung der Topografie einer Probe**

(71) Anmelder: Alicona Imaging GmbH, 8074 Grambach bei Graz (AT)
(72) Erfinder: Prantl, Manfred, 8010 Graz (AT); Scherer, Stefan, 8010 Graz (AT)
(74) Vertreter: Margotti, Herwig Franz

(57) **Zusammenfassung**

Ein Apparat (1) zur optischen Messung der Topografie einer Probe (2) umfasst eine Beleuchtungseinrichtung (3) zum Beleuchten einer zu messenden Probe, eine Optik (5) mit limitierter Schärfentiefe zum Auffangen von Darstellungen der Probe in Form des von der Probe abgestrahlten Lichts, einen an die Optik angeschlossenen Bildsensor (7) zum Aufnehmen von Bildern der von der Optik aufgefangenen Darstellungen der Probe und eine Auswerteeinheit (9) zum Auswerten der vom Bildsensor aufgenommenen Bilder durch Kombinieren der Bilder zu einem 3D Modell der Probe. Weiters ist eine kontinuierlich betreibbare Fokuspunkt-Verlagerungseinrichtung (10) zur kontinuierlichen Verlagerung des Fokuspunkts (F) der Optik (5) in Relation zur Probe (2) vorgesehen, wobei der Bildsensor (7) dazu ausgebildet ist, Bilder während des kontinuierlichen Verlagerungsvorgangs aufzunehmen.

## Beschreibung

Die Erfindung betrifft ein Verfahren zur optischen Messung der Topografie einer Probe, umfassend das Beleuchten einer zu messenden Probe, das Auffangen von Darstellungen der Probe in Form des von der Probe abgestrahlten Lichts mit einer Optik mit limitierter Schärfentiefe, das Aufnehmen von Bildern der von der Optik aufgefangenen Darstellungen der Probe in einem Bildsensor und das Auswerten der vom Bildsensor aufgenommenen Bilder durch Kombinieren der Bilder zu einem 3D Modell der Probe.

Die Erfindung betrifft weiters einen Apparat zur optischen Messung der Topografie einer Probe, umfassend eine Beleuchtungseinrichtung zum Beleuchten einer zu messenden Probe, eine Optik mit limitierter Schärfentiefe zum Auffangen von Darstellungen der Probe in Form des von der Probe abgestrahlten Lichts, einen an die Optik angeschlossenen Bildsensor zum Aufnehmen von Bildern der von der Optik aufgefangenen Darstellungen der Probe und eine Auswerteeinheit zum Auswerten der vom Bildsensor aufgenommenen Bilder durch Kombinieren der Bilder zu einem 3D Modell der Probe.

Fokus Variation ist eine Technologie zur optischen Messung der Topografie einer Probe. Dabei wird das Licht einer Beleuchtungseinrichtung auf die zu messende Probe gestrahlt und das von der Probe abgestrahlte Licht mit einer Optik aufgefangen. Dazu wird eine Optik mit limitierter Schärfentiefe verwendet. Wenn der Fokuspunkt der Optik, zum Beispiel durch eine Verfahreinheit, variiert wird, werden unterschiedliche Bereiche der Probe scharf in einem Bildsensor abgebildet. Die Bilder des Bildsensors werden in einer Auswerteeinheit zu einem 3D Modell kombiniert. Diese Technologie wird in der ISO Norm 25178-6 zur topographischen Messung von Oberflächen beschrieben.

Nachteilig an den bisher bekannten Verfahren und Apparaten zur optischen Messung der Topografie einer Probe sind jedoch die unbefriedigende Arbeitsgeschwindigkeit, die beschränkte Lebensdauer der Apparate sowie die bisher erzielten Genauigkeiten der Messungen.

Der vorliegenden Erfindung liegt die Aufgabe zugrunde, ein Verfahren und einen Apparat der eingangs bezeichnete Gattung zur optischen Messung der Topografie einer Probe dahingehend weiterzubilden, dass die Nachteile des Standes der Technik überwunden oder zumindest gemildert werden.
Diese Aufgabe wird durch Bereitstellen eines Verfahrens und eines Apparats zur optischen Messung der Topografie einer Probe mit den kennzeichnenden Merkmalen der Ansprüche 1 bzw. 10 gelöst. Vorteilhafte Ausgestaltungen der Erfindung ergeben sich aus den Unteransprüchen.

Durch die erfindungsgemäße Idee, den Fokuspunkt der Optik in Relation zur Probe kontinuierlich zu verlagern, wobei der Bildsensor Bilder während des Verlagerungsvorgangs aufnimmt, muss eine Fokuspunkt-Verlagerungseinheit, die die Verlagerung des Fokuspunkts durchführt, nicht jedes Mal gestoppt werden, wenn ein Bild der Probe aufgenommen werden soll, um danach wieder in Betrieb gesetzt zu werden. Dadurch wird das Verzögern und Beschleunigen der Fokuspunkt-Verlagerungseinheit eliminiert. Dies beschleunigt den Aufnahmeprozess und erhöht die Lebensdauer der Fokuspunkt-Verlagerungseinheit.

In einer bevorzugten Ausgestaltung der Erfindung werden vom Bildsensor während des Verlagerungsvorgangs an definierten Positionen des Fokuspunkts in Relation zur Probe Bilder aufgenommen. Dazu ist eine Messsteuerung vorgesehen, die die momentane Position des Fokuspunkts in Relation zur Probe erfasst und an definierten Positionen ein Triggersignal an den Bildsensor sendet, das das Aufnehmen eines Bildes auslöst. Es wird somit gewährleistet, dass die Daten des Bildsensors an einer definierten Position aufgenommen werden. Damit kann die Genauigkeit der Auswertung erhöht werden.

In einer weiteren Ausführungsform der Erfindung erfolgt das Beleuchten der Probe nicht ständig, sondern intermittierend während des Verlagerungsvorgangs des Fokuspunkts in Relation zur Probe, wobei vorzugsweise die Probe im Wesentlichen nur dann beleuchtet wird, wenn der Bildsensor ein Bild aufnimmt. Die Beleuchtung (koaxial, Hellfeld, Dunkelfeld oder Durchlicht) wird eingeschaltet, kurz bevor der Bildsensor getriggert wird, ein Bild aufzunehmen und nach erfolgter Bildaufnahme ausgeschaltet, bis oder kurz bevor die nächste Bildaufnahmeposition erreicht wird. Der Vorteil dieser Ausführungsform der Erfindung ist, dass die Beleuchtungseinrichtung einer geringeren Hitzeentwicklung ausgesetzt ist. Dies führt zu einer konstanteren Temperatur in der Apparatur, was wiederum genauere Messungen zulässt.

Vorzugsweise wird die Probe mittels LED-Leuchtmitteln beleuchtet. LED-Leuchtmittel erlauben beim kurzzeitigen Beleuchten eine Überschreitung der nominalen Intensität, ohne dass ihre Lebensdauer reduziert wird.

Die Erfindung sieht weiters vor, die Beleuchtungs-Intensität und/oder die Beleuchtungs-Position in Bezug auf die Probe zu variieren. Bei Proben mit stark unterschiedlichen Reflexionseigenschaften müssen Bilder mit unterschiedlichen Empfindlichkeits-Einstellungen des Bildsensors oder unterschiedlicher Beleuchtungs-Intensität verwendet und die Messungen bei der Auswertung fusioniert werden. Dadurch kann eine höhere radiometrische Dynamik der Probenoberfläche abgebildet werden. Da unterschiedliche Oberflächenneigungen das Licht unterschiedlich reflektieren, kann durch Variation der Beleuchtungs-Position auf die Topografie der Probe rückgeschlossen werden. Der Vorteil dabei ist, dass wenige Bilder zu Messung der Oberfläche ausreichen.

In einer weiteren Ausführungsform der Erfindung wird zur Verlagerung des Fokuspunkts die Brennweite der Optik verändert, wobei in einer bevorzugten Variante die Optik zumindest eine Flüssiglinse mit steuerbarer Brennweite aufweist und Brennweitenverstellmittel zur Ansteuerung der Flüssiglinse vorgesehen sind. Die Verwendung von Flüssiglinsen zur Brennweitensteuerung hat den Vorteil hoher Lebensdauer der Optik und der gesamten Apparatur aufgrund der Reduzierung bewegter mechanischer Teile, sowie einer schnelleren Fokus-Verstellbarkeit und einer kompakteren Bauweise der Optik und damit der gesamten Apparatur.

Alternativ dazu kann die Verlagerung des Fokuspunkts in Relation zur Probe durch die Veränderung des relativen Abstands zwischen Optik (bzw. deren Brennpunkt) und der Probe vorgenommen werden, wozu ein motorisch bewegbarer Probenhalter und/oder eine motorische Verfahreinheit der Optik vorgesehen werden können.

Zusammenfassend kann gesagt werden, dass die Vorteile der Erweiterung der Fokusvariation gemäß der vorliegenden Erfindung eine höhere Genauigkeit, ein schnelleres Messen und eine kompaktere Messapparatur ermöglichen.

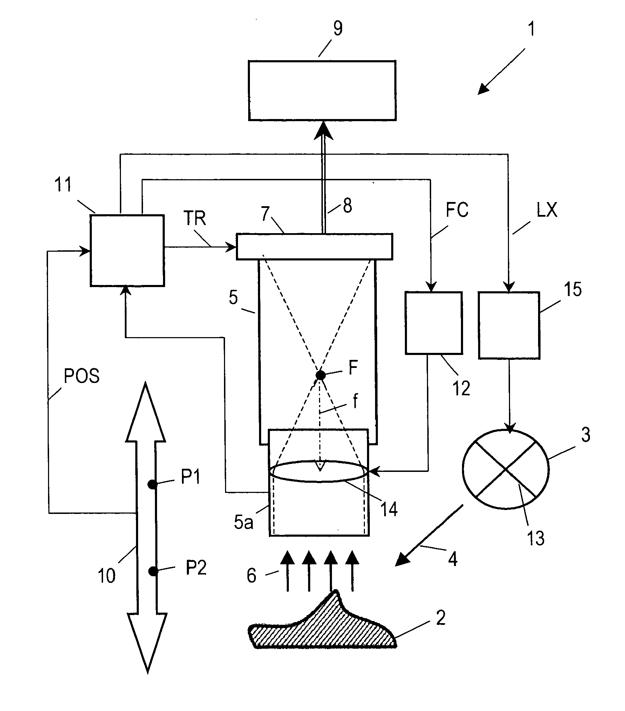

Die Erfindung wird nun anhand eines nicht einschränkenden Ausführungsbeispiels unter Bezugnahme auf die einzige Zeichnungsfigur näher erläutert, die eine schematische Blockschaltbilddarstellung eines erfindungsgemäßen Apparats zur optischen Messung der Topografie einer Probe umfasst.

Der Apparat 1 zur optischen Messung der Topografie einer Probe 2 umfasst eine Beleuchtungseinrichtung 3 zum Beleuchten (Pfeil 4) der zu messenden Probe 2, wobei die Beleuchtung z.B. durch Koaxiallicht, Hellfeld, Dunkelfeld oder Durchlicht erfolgen kann. Weiters ist eine Optik 5 mit limitierter Schärfentiefe zum Auffangen von Darstellungen der Probe 2 in Form des von der Probe abgestrahlten Lichts 6 vorgesehen. Die Optik 5 weist einen Brennpunkt F auf. Ein im Lichtweg der Optik 5 angeordneter Bildsensor 7 dient zum Aufnehmen von digitalen Bildern der von der Optik 5 aufgefangenen Darstellungen der Probe 2. Die vom Bildsensor 7 aufgenommenen Bilder (Bilddaten) werden über einen Datenbus 8 an eine Auswerteeinheit 9 übertragen, wo sie durch Kombinieren der Bilder zu einem 3D Modell der Probe 2 ausgewertet werden.

Gemäß der Erfindung ist eine in der Zeichnung symbolisch als Doppelpfeil dargestellte Fokuspunkt-Verlagerungseinrichtung 10 vorgesehen, die es ermöglicht den Fokuspunkt F der Optik 5 in Relation zur Probe 2 kontinuierlich zu verlagern, wobei durch diese Fokusvariation und die geringe Schärfentiefe der Optik 2 unterschiedliche Bereiche der Probenoberfläche scharf in dem Bildsensor 7 abgebildet werden.

Der Bildsensor 7 ist dazu ausgebildet, Bilder während des kontinuierlichen Fokuspunkt-Verlagerungsvorgangs aufzunehmen. Um dies zu erreichen, ist eine Messsteuerung 11 vorgesehen, die die momentane Position (in der Zeichnung dargestellt als Positionssignal POS) des Fokuspunkts F in Relation zur Probe 2 erfasst und an definierten Positionen P1, P2 an den Bildsensor 7 ein Triggersignal TR sendet, das im Bildsensor 7 das Aufnehmen eines Bildes auslöst. Durch dieses kontinuierliche Variieren des Fokuspunkts F in Relation zur Probe 2 muss - anders als beim Stand der Technik - nicht bei jeder Bildaufnahmeposition die Fokuspunkt-Verlagerungseinrichtung 10 angehalten werden, um das Bild aufzunehmen, sondern die Bilder werden vielmehr während kontinuierlicher Bewegung aufgenommen. Dadurch wird das Verzögern und Beschleunigen der Fokuspunkt-Verlagerungseinrichtung 10 vermieden. Dies beschleunigt den Bildaufnahmevorgang und erhöht die Lebensdauer der Fokuspunkt-Verlagerungseinrichtung 10.

In einer bevorzugten Ausführungsform der Erfindung umfasst die Fokuspunkt-Verlagerungseinrichtung 10 Brennweitenverstellmittel 12, die auf ein Linsensystem der Optik 5 wirken. Die Brennweitenverstellmittel 12 werden über ein Brennweitensteuersignal FC von der Messsteuerung 11 angesteuert. Bevorzugt ist dabei, dass die Optik 5 zumindest eine Flüssiglinse 14 mit steuerbarer Brennweite f aufweist, die von den Brennweitenverstellmitteln 12 angesteuert wird. Die Verwendung von Flüssiglinsen 14 zur Brennweitensteuerung hat den Vorteil hoher Lebensdauer der Optik und der gesamten Apparatur aufgrund der Reduzierung bewegter mechanischer Teile, sowie einer schnelleren Fokus-Verstellbarkeit und einer kompakteren Bauweise der Optik 5 und damit des gesamten Apparats 1.

Alternativ dazu kann die Verlagerung des Fokuspunkts F in Relation zur Probe 2 durch die Veränderung des relativen Abstands zwischen Optik 5 (bzw. deren Brennpunkt F) und der Probe 2 vorgenommen werden. Dazu ist in einer Variante vorgesehen, dass die Fokuspunkt-Verlagerungseinrichtung 10 eine (nicht explizit dargestellte) motorische Verfahreinheit für einen beweglichen, den Fokuspunkt F beeinflussenden Teil 5a der Optik 5 aufweist, die von den Brennweitenverstellmitteln 12 angesteuert wird. In einer anderen Variante umfasst die Fokuspunkt-Verlagerungseinrichtung 10 einen in der Zeichnung nicht dargestellten motorisch bewegbaren Probenhalter, wie z.B. einen verfahrbaren Tisch.

Die dargestellte Ausführungsform des erfindungsgemäßen Apparats 1 zur optischen Messung der Topografie einer Probe 2 umfasst weiters eine von der Messsteuerung 11 mittels Beleuchtungssteuerungssignalen LX angesteuerte Beleuchtungssteuerung 15, die mehrere Betriebsmodi aufweisen kann.

Erstens kann die Beleuchtungssteuerung 15 die Beleuchtungseinrichtung 3 während des Verlagerungsvorgangs des Fokuspunkts in Relation zur Probe intermittierend ein- und ausschalten oder zumindest den Lichtstrahl 4 abdecken bzw. abschwächen, wobei vorzugsweise die Beleuchtungssteuerung 15 in Korrelation zum Triggersignal TR der Messsteuerung 11 Leuchtmittel 13 einschaltet und nach der Bildaufnahme wieder abschaltet. Dadurch ist die Beleuchtungseinrichtung 3 einer geringeren Hitzeentwicklung ausgesetzt, die zu einer konstanteren Temperatur im Apparat 1 und folglich zu genaueren Messungen führt. Die Leuchtmittel 13 sind vorzugsweise LEDs, die kurzzeitig über ihrer nominalen Intensität betrieben werden können, ohne dabei Schaden zu nehmen.

In einem zweiten Betriebsmodus kann die Beleuchtungssteuerung 15 die Beleuchtungs-Intensität der Beleuchtungseinrichtung 3 variieren, was für Proben mit stark unterschiedlichen Reflexionseigenschaften eine höhere radiometrische Dynamik der Probenoberfläche ermöglicht, wenn unter unterschiedlichen Beleuchtungs-Intensitäten aufgenommene Bilder in der Auswerteeinheit 9 fusioniert werden.

Drittens kann die Beleuchtungssteuerung 15 die Beleuchtungs-Position der Beleuchtungseinrichtung 3 in Bezug auf die Probe 2 variieren. Da unterschiedliche Oberflächenneigungen das Licht unterschiedlich reflektieren kann durch Variation der Beleuchtungs-Position auf die Topografie der Probe 2 rückgeschlossen werden. Der Vorteil dabei ist, dass wenige Bilder zu Messung der Oberfläche ausreichen.

Die beschriebenen erfindungsgemäßen Maßnahmen zur Erweiterung der Fokusvariation können je nach Anwendung zu einem Messsystem kombiniert werden. Es kann also für eine gewisse Applikation eine optimale Lösung gefunden werden. In jedem Fall werden durch die erfindungsgemäße Erweiterung der Fokusvariation höhere Genauigkeit, schnellere Messungen und ein kompakterer Messapparat erzielt.

## Patentansprüche

1. Verfahren zur optischen Messung der Topografie einer Probe, umfassend das Beleuchten einer zu messenden Probe (2), das Auffangen von Darstellungen der Probe in Form des von der Probe abgestrahlten Lichts (6) mit einer Optik (5) mit limitierter Schärfentiefe, das Aufnehmen von Bildern der von der Optik aufgefangenen Darstellungen der Probe in einem Bildsensor (7) und das Auswerten der vom Bildsensor aufgenommenen Bilder durch Kombinieren der Bilder zu einem 3D Modell der Probe, **dadurch gekennzeichnet, dass** der Fokuspunkt (F) der Optik (5) in Relation zur Probe (2) kontinuierlich verlagert wird, wobei der Bildsensor (7) während des Verlagerungsvorgangs Bilder aufnimmt.

2. Verfahren nach Anspruch 1, **dadurch gekennzeichnet, dass** während des Verlagerungsvorgangs an definierten Positionen (P1, P2) des Fokuspunkts in Relation zur Probe vom Bildsensor (7) Bilder aufgenommen werden.

3. Verfahren nach Anspruch 1 oder 2, **dadurch gekennzeichnet, dass** die Probe (2) während des Verlagerungsvorgangs des Fokuspunkts (F) in Relation zur Probe intermittierend beleuchtet wird, wobei vorzugsweise die Probe (2) im Wesentlichen nur dann beleuchtet wird, während der Bildsensor ein Bild aufnimmt.

4. Verfahren nach Anspruch 3, **dadurch gekennzeichnet, dass** die Probe (2) mittels LED-Leuchtmitteln (13) beleuchtet wird.

5. Verfahren nach einem der vorhergehenden Ansprüche, **dadurch gekennzeichnet, dass** die Beleuchtungs-Intensität variiert wird.

6. Verfahren nach einem der vorhergehenden Ansprüche, **dadurch gekennzeichnet, dass** die Beleuchtungs-Position in Bezug auf die Probe (2) variiert wird.

7. Verfahren nach einem der vorhergehenden Ansprüche, **dadurch gekennzeichnet, dass** zur Verlagerung des Fokuspunkts die Brennweite (f) der Optik (5) verändert wird.

8. Verfahren nach Anspruch 7, **dadurch gekennzeichnet, dass** die Optik zumindest eine Flüssiglinse (14) mit steuerbarer Brennweite (f) aufweist.

9. Verfahren nach einem der Ansprüche 1 bis 6, **dadurch gekennzeichnet, dass** zur Verlagerung des Fokuspunkts (F) der Abstand zwischen der Optik (5) und der Probe (2) verändert wird.

10. Apparat (1) zur optischen Messung der Topografie einer Probe (2), umfassend eine Beleuchtungseinrichtung (3) zum Beleuchten einer zu messenden Probe, eine Optik (5) mit limitierter Schärfentiefe zum Auffangen von Darstellungen der Probe in Form des von der Probe abgestrahlten Lichts, einen an die Optik angeschlossenen Bildsensor (7) zum Aufnehmen von Bildern der von der Optik aufgefangenen Darstellungen der Probe und eine Auswerteeinheit (9) zum Auswerten der vom Bildsensor aufgenommenen Bilder durch Kombinieren der Bilder zu einem 3D Modell der Probe, **gekennzeichnet durch** eine kontinuierlich betreibbare Fokuspunkt-Verlagerungseinrichtung (10) zur kontinuierlichen Verlagerung des Fokuspunkts (F) der Optik (5) in Relation zur Probe (2), wobei der Bildsensor (7) dazu ausgebildet ist, Bilder während des kontinuierlichen Verlagerungsvorgangs aufzunehmen.

11. Apparat nach Anspruch 10, **gekennzeichnet durch** eine Messsteuerung (11), die die momentane Position (POS) des Fokuspunkts (F) in Relation zur Probe erfasst und an definierten Positionen (P1, P2) an den Bildsensor ein Triggersignal (TR) an den Bildsensor (7) sendet, das das Aufnehmen eines Bildes auslöst.

12. Apparat nach Anspruch 10 oder 11, **gekennzeichnet durch** eine Beleuchtungssteuerung (15), die die Beleuchtungseinrichtung (3) während des Verlagerungsvorgangs des Fokuspunkts in Relation zur Probe intermittierend zu- und wegschaltet, wobei vorzugsweise die Beleuchtungssteuerung in Korrelation zum Triggersignal (TR) der Messsteuerung (11) die Beleuchtung einschaltet und nach der Bildaufnahme wieder abschaltet.

13. Apparat nach Anspruch 12, **dadurch gekennzeichnet, dass** die Beleuchtungseinrichtung (3) LED-Leuchtmittel (13) umfasst.

14. Apparat nach einem der Ansprüche 10 bis 13, **dadurch gekennzeichnet, dass** die Beleuchtungssteuerung (15) die Beleuchtungs-Intensität der Beleuchtungseinrichtung (3) variiert.

15. Apparat nach einem der Ansprüche 10 bis 14, **dadurch gekennzeichnet, dass** die Beleuchtungssteuerung (15) die Beleuchtungs-Position der Beleuchtungseinrichtung (3) variiert.

16. Apparat nach einem der Ansprüche 10 bis 15, **dadurch gekennzeichnet, dass** Brennweitenverstellmittel (12) vorgesehen sind.

17. Apparat nach Anspruch 16, **dadurch gekennzeichnet, dass** die Optik (5) zumindest eine Flüssiglinse (14) mit steuerbarer Brennweite (f) aufweist, die von den Brennweitenverstellmitteln (12) angesteuert wird.
